# EUROPEAN PATENT SPECIFICATION

(11) **EP 3 904 902 B1**
(45) Date of publication and mention of the grant of the patent: **23.04.2025**
(21) Application number: 19890176.1
(22) Date of filing: 22.10.2019
(51) Int. Cl.: G01S 7/481, G02F 1/29, G02F 1/015, G02B 6/125, G02B 6/12

(54) **MULTI-LAYER PHASED ARRAY LIDAR TRANSMISSION CHIP, MANUFACTURING METHOD, AND LIDAR**
MEHRSCHICHTIGER, PHASENGESTEUERTER LIDAR-ÜBERTRAGUNGSCHIP, HERSTELLUNGSVERFAHREN UND LIDAR
PUCE D'ÉMISSION LIDAR À RÉSEAU À COMMANDE DE PHASE MULTICOUCHE, PROCÉDÉ DE FABRICATION ET LIDAR

(30) Priority: 27.11.2018 CN 201811422332
(43) Date of publication of application: 03.11.2021
(73) Proprietor: Wuhan VanJee Optoelectronic Technology Co., Ltd., Wuhan, Hubei 430000 (CN)
(72) Inventor: WANG, Pengfei, Beijing 100193 (CN); XU, Yang, Beijing 100193 (CN); ZHANG, Yejin, Beijing 100193 (CN); YU, Hongyan, Beijing 100193 (CN); PAN, Jiaoqing, Beijing 100193 (CN); WANG, Qingfei, Beijing 100193 (CN); TIAN, Linyan, Beijing 100193 (CN)
(74) Representative: Valea AB
(86) International application number: PCT/CN2019/112394
(87) International publication number: WO 2020/108169

(56) References cited:
- EP-A1- 1 026 526
- CN-A- 106 597 413
- CN-A- 106 908 776
- CN-A- 107 966 691
- CN-A- 108 693 505
- CN-A- 108 828 712
- CN-U- 207 937 598
- CN-U- 209 373 098
- CHUNG SUNGWON ET AL: "A Monolithically Integrated Large-Scale Optical Phased Array in Silicon-on-Insulator CMOS", IEEE JOURNAL OF SOLID-STATE CIRCUITS, IEEE, USA, vol. 53, no. 1, 18 October 2017 (2017-10-18), pages 275 - 296, XP011674924, ISSN: 0018-9200, [retrieved on 20171227], DOI: 10.1109/JSSC.2017.2757009
- NOTAROS JELENA ET AL: "CMOS-Compatible Optical Phased Arrays with Monolithically-Integrated Erbium Lasers", 2018 CONFERENCE ON LASERS AND ELECTRO-OPTICS (CLEO), OSA, 13 May 2018 (2018-05-13), pages 1 - 2, XP033382131

## Description

### TECHNICAL FIELD

The present disclosure relates to the field of light detection and ranging (LiDAR) technologies and, in particular, to a phased array LiDAR transmitting chip of multi-layer materials, a manufacturing method thereof, and a LiDAR device.

### BACKGROUND

The concept of phased array LiDAR has been proposed for a long time, and various design schemes are also being developed. Current phased array LiDAR chips use silicon on insulator (SOI) material as a substrate, and make use of the characteristics of silicon to fabricate various on-chip structures, thus realizing basic functions of LiDAR.

But silicon has its own shortcomings. Since silicon is a strongly nonlinear material with a strong two-photon absorption effect and a free carrier absorption effect, and its low-order nonlinear refractive index is very large, making it difficult to transmit high-power light in a silicon waveguide with low loss, which greatly limits the optical power input to the phased array LiDAR transmitting chip, and seriously affects the detection performance of the LiDAR and brings great pressure to the signal detection part.

CHUNG SUNGWON ET AL: "A Monolithically Integrated Large-Scale Optical Phased Array in Silicon-on-Insulator CMOS", IEEE JOURNAL OF SOLID-STATE CIRCUITS, IEEE, USA, vol. 53, no. 1, 18 October 2017 (2017-10-18), pages 275 - 296, discloses that a large-scale monolithic silicon nanophotonic phased array on a chip creates and dynamically steers a high-resolution optical beam in free space, enabling emerging applications in sensing, imaging, and communication. The scalable architecture leverages sub-array structure, mitigating the impact of process variation on the phased array performance. In addition, sharing control electronics among multiple optical modulators in the scalable architecture reduces the number of digital-to-analog converters (DACs) required for an *N*² array from O(*N* ²) to O(N), allowing a small silicon footprint. An optical phased array for 1550-nm wavelength with 1024 uniformly spaced optical grating antennas, 1192 optical variable phase shifters, and 168 optical variable attenuators is integrated into a 5.7 mm × 6.4 mm chip in a commercial 180-nm silicon-on-insulator RF CMOS technology. The control signals for the optical variable phase shifters and attenuators are provided by 136 DACs with 14-bit nonuniform resolution using 2.5-V input-output transistors. The implemented phased array can create 0.03° narrow optical beams that can be steered unambiguously within ±22.5°.

NOTAROS JELENA ET AL: "CMOS-Compatible Optical Phased Arrays with Monolithically-Integrated Erbium Lasers", 2018 CONFERENCE ON LASERS AND ELECTRO-OPTICS (CLEO), OSA, 13 May 2018 (2018-05-13), pages 1 - 2, discloses that an electronically-steerable integrated optical phased array powered by an on-chip erbium-doped laser is experimentally demonstrated. This system represents the first demonstration of a rare-earth-doped laser monolithically integrated with an active CMOS-compatible silicon photonics system.

### SUMMARY

Embodiments of the present disclosure provides a phased array LiDAR transmitting chip of multi-layer materials, a manufacturing method thereof, and a LiDAR device, solving the power limit problem of a phased array LiDAR chip in the prior art, so that the optical power input into the phased array LiDAR transmitting chip may be greatly increased, thus greatly improving the detection performance of LiDAR, and reducing a great deal of pressure on the signal detection part. The invention is set out in the appended set of claims.

In a first aspect, an embodiment of the present disclosure provides a phased array LiDAR transmitting chip of multi-layer materials, including: a first material structure layer, an SOI silicon waveguide structure layer, and a coupling connection structure, the first material structure layer including: an input coupler and a beam splitter;
the input coupler is optically connected to the beam splitter; and the beam splitter is optically connected to the SOI silicon waveguide structure layer through the coupling connection structure;
the input coupler is configured to couple input light to the chip;
the beam splitter is configured to split a light wave coupled to the chip;
the coupling connection structure is configured to couple each of the split light waves into a corresponding silicon waveguide in the SOI silicon waveguide structure layer;
where the non-linear refractive index of a first material in the first material structure layer is lower than the non-linear refractive index of a silicon material and the first material is compatible with a CMOS process.

Further, in an implementation of the phased array LiDAR transmitting chip of multi-layer materials described above, the SOI silicon waveguide structure layer includes: phase modulators and an optical antenna;
the phase modulators and the optical antenna are connected through silicon waveguides;
the phase modulators are configured to change the phase of a light wave coupled to a corresponding silicon waveguide in the SOI silicon waveguide structure layer; and
the optical antenna is configured to transmit phase-changed light waves in silicon waveguides into space.

Further, in an implementation of the phased array LiDAR transmitting chip of multi-layer materials described above, the first material structure layer is located above the SOI silicon waveguide structure layer, and the first material structure layer and the SOI silicon waveguide structure layer are separated by a second material layer;
where the refractive index of the second material layer is lower than the refractive index of the first material structure layer and the SOI silicon waveguide structure layer.

Further, in an implementation of the phased array LiDAR transmitting chip of multi-layer materials described above, the coupling connection structure includes first material coupling waveguides and silicon coupling waveguides;
the first material coupling waveguides are connected to the rear end of a first material waveguide of the beam splitter, and the silicon coupling waveguides are connected to the front end of a silicon waveguide in the SOI silicon waveguide structure layer;
the first material coupling waveguides and the silicon coupling waveguides have respective wedge structures, the first material coupling waveguides and the silicon coupling waveguides have their tips facing each other, and the first material coupling waveguides and the silicon coupling waveguides have their projection areas overlap each other.

Further, in an implementation of the phased array LiDAR transmitting chip of multi-layer materials described above, the first material coupling waveguides and the silicon coupling waveguides have a tip width of 100 nm to 300 nm;
the rear-end width of each of the first material coupling waveguides is the same as the width of a corresponding first material waveguide of the beam splitter, and the rear-end width of the silicon coupling waveguides is the same as the width of a silicon waveguide in the SOI silicon waveguide structure layer; and
an overlapping region has a length of 10 µm to 100 µm.

Further, in an implementation of the phased array LiDAR transmitting chip of multi-layer materials described above, the first material structure layer further includes a first material backbone waveguide;
the input coupler is optically connected to the beam splitter through the first material backbone waveguide.

In a second aspect, an embodiment of the present disclosure provides a phased array LiDAR device, including the phased array LiDAR transmitting chip of multi-layer materials according to any implementation of the first aspect described above.

In a third aspect, an embodiment of the present disclosure provides a method for manufacturing the phased array LiDAR transmitting chip of multi-layer materials according to any implementation of the first aspect described above, the method including:
forming an SOI silicon waveguide structure layer in a first region above the top silicon layer of an SOI substrate; and
forming a first material structure layer in a second region above the top silicon layer of the SOI substrate, so as to form a coupling connection structure between the rear end of the first material structure layer and the front end of the SOI silicon waveguide structure layer;
where the first material structure layer includes: an input coupler and a beam splitter; the non-linear refractive index of a first material in the first material structure layer is lower than the non-linear refractive index of a silicon material and the first material is compatible with a CMOS process.

Further, in an implementation of the method described above, the forming an SOI silicon waveguide structure layer in a first region above a top silicon layer of an SOI substrate includes:
transferring a first waveguide pattern to the top silicon layer of the SOI substrate by using an electron beam exposure process or a stepper lithography process, and forming the SOI silicon waveguide structure layer in the first region by using an inductively coupled plasma (ICP) etching process.

Further, in an implementation of the method described above, after the forming the SOI silicon waveguide structure layer in the first region above the top silicon layer of the SOI substrate, further includes:
performing ion implantation in the phase modulation region of the SOI silicon waveguide structure layer to form a PIN junction or a PN junction, for fabricating phase modulators;
transferring a grating pattern to the top silicon layer of the SOI substrate by using the electron beam exposure process or the stepper lithography process, and forming a grating by using the ICP etching process to fabricate the optical antenna; and
growing a second material layer on the chip by using a plasma enhanced chemical vapor deposition (PECVD) process, where the refractive index of the second material layer is lower than the refractive index of the first material structure layer and the SOI silicon waveguide structure layer.

Further, in an implementation of the method described above, the forming a first material structure layer in a second region above the top silicon layer of the SOI substrate, includes:
growing a first material layer in the second region above the second material layer by using the PECVD process;
transferring a second waveguide pattern to the first material layer by using the electron beam exposure process or the stepper lithography process, and fabricating the first material structure layer in the second region by using the ICP etching process

Further, in an implementation of the method described above, after forming a first material structure layer in a second region above the top silicon layer of the SOI substrate, the method further includes:
growing an optical isolation layer on the chip by using the PECVD process;
forming through holes on corresponding positions of thermodes and electrodes by using the ICP etching process, the thorough holes leading to the SOI silicon waveguide structure layer;
growing a heating metal material and an electrode metal material by using a magnetron sputtering process or a thermal evaporation process, and forming thermodes, metal leads and electrodes by using a lithography process;
growing a protective layer on the chip by using the PECVD process; and
forming electrode windows and a grating window by using the ICP etching process.

Embodiments of the present disclosure provide a phased array LiDAR transmitting chip of multi-layer materials, a manufacturing method thereof, and a LiDAR device. The phased array LiDAR transmitting chip of multi-layer materials includes: a first material structure layer, a SOI silicon waveguide structure layer, and a coupling connection structure. The first material structure layer includes an input coupler and a beam splitter; the input coupler is optically connected to the beam splitter; the beam splitter is optically connected to the SOI silicon waveguide structure layer through the coupling connection structure; the input coupler is configured to couple input light into the chip; the beam splitter is configured to split a light wave coupled into the chip; the coupling connection structure is configured to couple each of the split light waves into a silicon waveguide corresponding to the SOI silicon waveguide structure layer; where the non-linear refractive index of the first material in the first material structure layer is lower than the non-linear refractive index of a silicon material, and the first material is compatible with a CMOS process. Because the non-linear refractive index of the first material in the first material structure layer is lower than the non-linear refractive index of the silicon material, the input coupler in the first material structure layer may couple a high-power light wave to the chip, and then divide the light wave into several light waves through the beam splitter, so as to reduce the optical power in each of first material waveguides, and enable the optical power in each of the first material waveguides to satisfy normal transmission in the silicon waveguide. As a result, the optical power input into the phased array LiDAR transmitting chip of multi-layer materials may be greatly increased, thus greatly improving the detection performance of LiDAR, and reducing a lot of pressure on the signal detection part.

It should be understood that what is described in the summary above is not intended to limit key features or important features of the embodiments of the present disclosure, nor is it intended to limit the scope of the present disclosure. Other features of the present disclosure will be easily understood from the following description.

### BRIEF DESCRIPTION OF DRAWINGS

In order to make the technical solutions in embodiments of the present disclosure or in the prior art clearer, the accompanying drawings used in the description of embodiments of the present disclosure or the prior art are briefly described hereunder. Obviously, the described drawings are merely some embodiments of present disclosure. For persons of ordinary skill in the art, other drawings may be obtained based on these drawings without any creative efforts.
FIG. 1 is a structure diagram of a phased array LiDAR transmitting chip of multi-layer materials according to a first embodiment of the present disclosure.
FIG.2 is a structure diagram of a phased array LiDAR transmitting chip of multi-layer materials according to a second embodiment of the present disclosure.
FIG. 3 is a structure diagram of a coupling connection structure of a phased array LiDAR transmitting chip of multi-layer materials according to a third embodiment of the present disclosure.
FIG. 4 is a flow diagram of a method for manufacturing a phased array LiDAR transmitting chip of multi-layer materials according to a sixth embodiment of the present disclosure.
FIG. 5 is a flow diagram of a method for manufacturing a phased array LiDAR transmitting chip of multi-layer materials according to a seventh embodiment of the present disclosure.
FIG. 6 is a structure diagram of an SOI substrate according to the seventh embodiment of the present disclosure.
FIG. 7 is a structure diagram after step 501 of the method for manufacturing a phased array LiDAR transmitting chip of multi-layer materials according to the seventh embodiment of the present disclosure is executed.
FIG. 8 is a structure diagram after step 503 of the method for manufacturing a phased array LiDAR transmitting chip of multi-layer materials according to the seventh embodiment of the present disclosure is executed.
FIG. 9 is a structure diagram after step 504 of the method for manufacturing a phased array LiDAR transmitting chip of multi-layer materials according to the seventh embodiment of the present disclosure is executed.
FIG. 10 is a structure diagram after step 506 of the method for manufacturing a phased array LiDAR transmitting chip of multi-layer materials according to the seventh embodiment of the present disclosure is executed.
FIG. 11 is a structure diagram after step 507 of the method for manufacturing a phased array LiDAR transmitting chip of multi-layer materials according to the seventh embodiment of the present disclosure is executed.
FIG. 12 is a structure diagram after step 509 of the method for manufacturing a phased array LiDAR transmitting chip of multi-layer materials according to the seventh embodiment of the present disclosure is executed.
FIG. 13 is a structure diagram of the method after step 511 for manufacturing a phased array LiDAR transmitting chip of multi-layer materials according to the seventh embodiment of the present disclosure is executed.

### REFERENCE NUMERALS IN DRAWINGS

- 1: Substrate silicon layer
- 2: Buried oxide layer
- 21: Top silicon layer
- 3: SOI Silicon waveguide structure layer
- 30: First region
- 31: Phase modulator
- 32: Optical antenna
- 4: First material structure layer
- 40: Second region
- 41: Input coupler
- 42: Beam splitter
- 5: Coupling connection structure
- 51: First material coupling waveguide
- 52: Silicon coupling waveguide
- 6: Second material layer
- 7: Grating
- 8: Optical isolation layer
- 9: Electrode
- 10: Thermode
- 11: Metal lead
- 12: Protective layer
- 13: Electrode window
- 14: Grating window

### DESCRIPTION OF EMBODIMENTS

Embodiments of the present disclosure will be described in further details in the following with reference to the accompanying drawings. Although some embodiments of the present disclosure are shown in the drawings, it should be understood that the present disclosure may be implemented in various forms and should not be construed as being limited to the embodiments described below. Rather, these embodiments are provided for a more thorough and complete understanding of the present disclosure. It should be understood that the drawings and embodiments of the present disclosure are only for exemplary purposes, and are not intended to limit the protection scope of the present disclosure.

The terms "first", "second", "third", "fourth", and the like (if any) in the description and claims of the embodiments of the present disclosure and the above-mentioned drawings are used to distinguish similar objects, and it does not set a specific order or sequence. It should be understood that the data used in this way are interchangeable under appropriate circumstances, so that the embodiments described herein may be implemented out of the order illustrated or described herein. In addition, the terms "including" and "having" and any of their variations are intended to cover non-exclusive inclusion.

### First embodiment

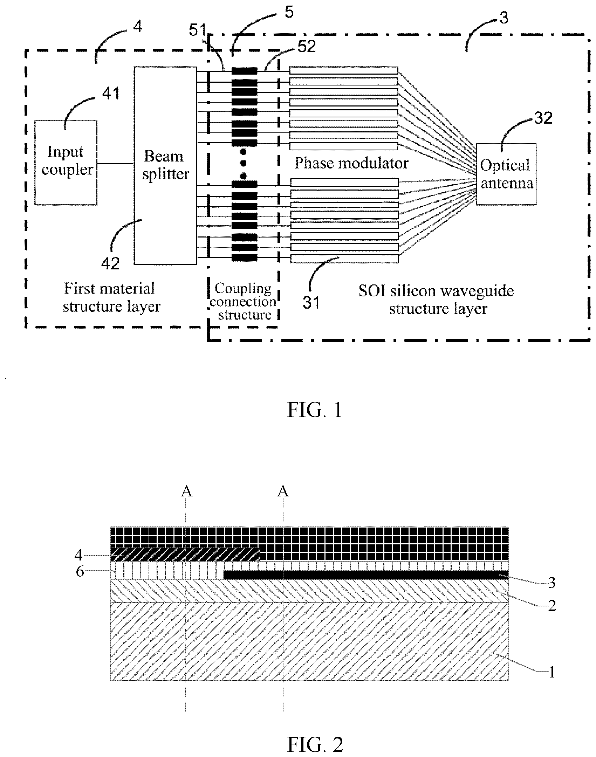

FIG. 1 is a structure diagram of a phased array LiDAR transmitting chip of multi-layer materials according to a first embodiment of the present disclosure. As shown in FIG. 1, the phased array LiDAR transmitting chip of multi-layer materials provided in this embodiment includes: a first material structure layer 4, an SOI silicon waveguide structure layer 3, and a coupling connection structure 5, and the first material structure layer 4 includes an input coupler 41 and a beam splitter 42.

The input coupler 41 is optically connected to the beam splitter 42; the beam splitter 42 is optically connected to the SOI silicon waveguide structure layer 3 through the coupling connection structure 5.

The input coupler 41 is configured to couple input light to the chip. The beam splitter 42 is configured to split a light wave coupled to the chip. The coupling connection structure 5 is configured to couple each of the split light waves to a corresponding silicon waveguide in the SOI silicon waveguide structure layer 3.

The non-linear refractive index of a first material in the first material structure layer 4 is lower than the non-linear refractive index of a silicon material, and the first material is compatible with a complementary metal oxide semiconductor (CMOS) process.

The term "non-linear refractive index" refers to low-order non-linear refractive indexes. The low-order non-linear refractive indexes may also be the first-order non-linear refractive index, the second-order non-linear refractive index, the third-order non-linear refractive index, etc.

Specifically, in this embodiment, the phased array LiDAR transmitting chip of multi-layer materials is integrated on an SOI substrate satisfying the CMOS process. The SOI substrate includes a substrate silicon layer 1, a buried oxide layer 2 and a top silicon layer 21 from bottom to top. The material and thickness of each layer of the SOI substrate are not limited in this embodiment. For example, the material and thickness of each layer may be customized according to different needs, or a conventional standard CMOS process SOI substrate product may be used. For example, the material of the substrate silicon layer 1 is silicon with a thickness of 500 µm to 600 µm. The material of the buried oxide layer 2 is silicon dioxide with a thickness of 2 µm, and the material of the top silicon layer 21 is silicon with a thickness of 220 nm or 340 nm.

For the convenience of description, the following embodiments will use the above-mentioned standard CMOS process SOI substrate to integrate the phased array LiDAR transmitting chip of multi-layer materials according to the embodiments of the present disclosure, where the thickness of the top silicon layer 21 nm is 220 nm.

Because silicon has a large low-order non-linear refractive index, and the silicon material exhibits a strong two-photon absorption effect and free carrier absorption effect, so generally the optical power allowed to be transmitted in silicon waveguides is very small, usually about 100 mw. This makes a conventional pure silicon-based phased array LiDAR transmitting chip unable to achieve on-chip processing and emission of high-power lasers, which seriously reduces the detection performance of the LiDAR.

In order to solve the above problems, in this embodiment, the first material structure layer 4 having a lower nonlinear refractive index than the nonlinear refractive index of a silicon material is used. The first material structure layer 4 includes multiple forms of first material waveguides therein to form the input coupler 41 and the beam splitter 42. Moreover, the first material in the first material structure layer 4 is compatible with the CMOS process. The first material may be a silicon-like material, such as silicon nitride or silicon oxynitride. Therefore, the input coupler 41 in the first material structure layer 4 is configured to couple light waves to the chip and may couple high-power input light to the first material structure layer 4.

Because the first material has a relatively low refractive index, then the size of the input coupler 41 of the first material is enabled to be larger than the size of a silicon input coupler in the prior art. Therefore, the mismatch between the spot size of the input coupler 41 and the fiber spot size may be greatly reduced, and the coupling efficiency may be effectively improved. The input coupler 41 of the first material may achieve a higher coupling efficiency than the silicon input coupler in the prior art. Moreover, the first material is not easily affected by two-photon absorption effect and carrier absorption effect, and its first order nonlinear refractive index is nearly 20 times smaller than the first order nonlinear refractive index of silicon, enabling light waves of optical power that is much higher than optical power transmitted in the silicon waveguide to be transmitted in the waveguide of the first material structure layer 4.

In this embodiment, the beam splitter 42 is configured to split a light wave coupled to the chip, the light wave coupled to the input coupler 41, after passing through the beam splitter 42, is divided into several light waves so that the optical power in each of the first material waveguides after beam-splitting by the beam splitter 42 is much smaller. After the light wave is divided into a sufficient number of light waves, optical power of each of the light waves may satisfy that after being normally transmitted in the silicon waveguide, then each of the light waves is coupled to the a corresponding silicon waveguide in the SOI silicon waveguide structure 3 through the coupling connection structure 5.

The phased array LiDAR transmitting chip of multi-layer materials provided in this embodiment includes: a first material structure layer 4, an SOI silicon waveguide structure layer 3, and a coupling connection structure 5, and the first material structure layer 4 includes an input coupler 41 and a beam splitter 42; the input coupler 41 is optically connected to the beam splitter 42; the beam splitter 42 is optically connected to the SOI silicon waveguide structure layer 3 through the coupling connection structure 5; the input coupler 41 is configured to couple input light to the chip; the beam splitter 42 is configured to split the light wave coupled to the chip; the coupling connection structure 5 is configured to couple each of the split light waves to a corresponding silicon waveguide in the SOI silicon waveguide structure layer 3; where the non-linear refractive index of a first material in the first material structure layer 4 is lower than the non-linear refractive index of a silicon material and the first material is compatible with a CMOS process. Because the non-linear refractive index of the first material in the first material structure layer 4 is lower than the non-linear refractive index of the silicon material, the input coupler 41 in the first material structure layer 4 may couple a high-power light wave into the chip, and then divide the light wave into several light waves through the beam splitter 42, so as to reduce the optical power in each of the first material waveguides and enable the optical power in each of the first material waveguides to be able to satisfy normal transmission in the silicon waveguide. As a result, the optical power input into the phased array LiDAR transmitting chip of multi-layer materials may be greatly increased, thus greatly improving the detection performance of LiDAR, and reducing a lot of pressure on the signal detection part.

Further, as shown in FIG. 1, in the phased array LiDAR transmitting chip of multi-layer materials provided in this embodiment, the SOI silicon waveguide structure layer 3 includes: phase modulators 31 and an optical antenna 32.

The phase modulators 31 and the optical antenna 32 are connected through silicon waveguides.

Specifically, the phase modulators 31 are configured to change the phase of a light wave coupled to a corresponding silicon waveguide in the SOI silicon waveguide structure layer 3. The optical antenna 32 is configured to transmit phase-changed light waves in the silicon waveguides into space.

In this embodiment, the phase modulators 31 and the optical antenna 32 are optically connected through silicon waveguides. The phase modulators 31 forms an electrode with a silicon waveguide and adjusts the refractive index of the silicon waveguide by applying current or voltage bias, thus changing the phase of the light wave in each waveguide. The light waves in the silicon waveguides are phase-adjusted by the phase modulators 31 and then transmitted by the silicon waveguides to the optical antenna 32 and emitted into space.

In the phased array LiDAR transmitting chip of multi-layer materials provided in this embodiment, the SOI silicon waveguide structure layer 3 includes phase modulators 31 and an optical antenna 32. The phase modulators and the optical antenna are connected through the silicon waveguides; the phase modulators 31 are configured to change the phase of a light wave coupled to a corresponding silicon waveguide in the SOI silicon waveguide structure layer 3. The optical antenna 32 is configured to transmit phase-changed light waves in the silicon waveguides into space. Therefore, the input high-power light to the phased array LiDAR transmitting chip of multi-layer material s may be emit into space, thus greatly improving the detection performance of LiDAR and reducing a lot of pressure on signal detection part.

### Second embodiment

FIG. 2 is a structure diagram of a phased array LiDAR transmitting chip of multi-layer materials according to a second embodiment of the present disclosure. As shown in FIG. 2, the phased array LiDAR transmitting chip provided in this embodiment is based on the phased array LiDAR transmitting chip of multi-layer materials in the first embodiment of present disclosure, and further includes: a second material layer 6.

Further, in this embodiment, the first material structure layer 4 is located above the SOI silicon waveguide structure layer 3. And the first material structure layer 4 and the SOI silicon waveguide structure layer 3 are separated by the second material layer 6.

The refractive index of the second material layer 6 is lower than the refractive index of the first material structure layer 4 and the SOI silicon waveguide structure layer 3.

Specifically, in this embodiment, the first material structure layer 4 and the SOI silicon waveguide structure layer 3 are separated by the second material layer 6 having the lower refractive index than both the first material structure layer 4 and the SOI silicon waveguide structure layer 3. The second material layer 6 may be compatible with a CMOS process. For example, the second material layer 6 may be a silicon dioxide layer. In this embodiment, the thickness of the second material layer 6 corresponds to an operating wavelength of the phased array LiDAR transmitting chip. The thickness is approximately the quotient of a quarter of the operating wavelength and the refractive index of the second material. If the operating wavelength of the phased array laser transmitting chip is 1.5 µm to 1.6 µm, then the thickness of the second material layer 6 may be set as 50 nm to 500 nm.

### Third embodiment

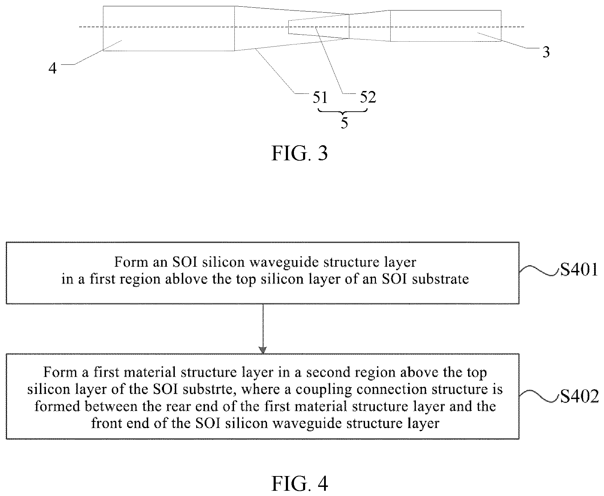

FIG. 3 is a structure diagram of a coupling connection structure 5 of a phased array LiDAR transmitting chip of multi-layer materials according to a third embodiment of the present disclosure, which is a top view of FIG. 2 along the direction A. With reference to FIG. 1 and FIG. 3, in this embodiment, the first material coupling waveguide 51 is connected to the rear end of a corresponding first material waveguide of the beam splitter 42, and the silicon coupling waveguide 52 is connected to the front end of a corresponding silicon waveguide of the SOI silicon waveguide structure layer 3.

The first material coupling waveguide 51 and the silicon coupling waveguide 52 have respective wedge structures, the first material coupling waveguide 51 and the silicon coupling waveguide 52 have their tips facing each other, and the first material coupling waveguide 51 and the silicon coupling waveguide 52 have their projection areas overlap each other.

In a practical application, the coupling connection structure 5 is wedge structures overlapping with each other, and there is a second material layer 6 between the first material coupling waveguides 51 and the silicon coupling waveguides 52, and two wedge structures have their tips facing each other. In the first material coupling waveguides 51 and the silicon coupling waveguides 52, the wedge structures are used to reduce restriction on light waves in the waveguides, so that the light waves are coupled from the first material coupling waveguides 51 to the silicon coupling waveguides 52 through the principle of evanescent wave coupling.

The tip width of the first material coupling waveguide 51 and the tip width of the silicon coupling waveguide 52 may be determined by a fabrication process and processing accuracy. In some implementations, the first material coupling waveguide 51 and the silicon coupling waveguide 52 have a tip width of 100 nm to 300 nm.

In some implementations, the front-end width of the first material coupling waveguide 51 is identical to the width of a corresponding first material waveguide of the beam splitter 42, and the rear-end width of the silicon coupling waveguide 52 is identical to the width of a corresponding silicon waveguide in the SOI silicon waveguide structure layer 3. That is, the rear-end widths of the first material coupling waveguide 51 and the silicon coupling waveguide 52 are identical to the widths of the waveguides connected thereto, respectively.

In some implementations, first material waveguides of the beam splitter 42 have a width of 800 nm to 1 µm, and then the first material coupling waveguides 51 have a front-end width of 800 nm to 1 µm. Silicon waveguides in the SOI silicon waveguide structure layer 3 have a width of 400 nm to 500 nm, and then the silicon coupling waveguides 52 have a rear-end width of 400 nm to 500 nm.

In some implementations, an overlapping region has a length of 10 µm to 100 µm. That is, an overlapping region in projection areas of the first material coupling waveguide 51 and the silicon coupling waveguide 52 has a length of 10 µm to 100 µm.

In the phased array LiDAR transmitting chip of multi-layer materials provided in this embodiment, the coupling connection structure 5 includes first material coupling waveguides 51 and silicon coupling waveguides 52; the first material coupling waveguides 51 are connected to the rear end of a corresponding first material waveguide of the beam splitter 42, and the silicon coupling waveguides 52 are connected to the front end of a corresponding silicon waveguide in the SOI silicon waveguide structure layer 3; and the first material coupling waveguides 51 and the silicon coupling waveguides 52 have respective wedge structures, the first material coupling waveguide 51 and the silicon coupling waveguide 52 have their tips facing each other, and the first material coupling waveguides 51 and the silicon coupling waveguides 52 have their projection areas overlapping each other. Moreover, the tip widths, the rear-end widths, and the length of the overlapping region of the first material coupling waveguides 51 and the silicon coupling waveguides 52 are set to corresponding preset ranges, which may effectively couple a light wave from the first material waveguide to the silicon waveguide and achieve an coupling spectral ratio of 0-100%.

### Fourth embodiment

This embodiment further refines the first material structure layer and the SOI silicon waveguide structure layer on the basis of the phased array LiDAR transmitting chip of multi-layer materials provided in the third embodiment of the present disclosure. The phased array LiDAR transmitting chip of multi-layer materials provided in this embodiment further includes the following solutions.

Further, in this embodiment, the first material structure layer further includes a first material backbone waveguide.

The input coupler 41 is optically connected to the beam splitter 42 through the first material backbone waveguide.

Preferably, each waveguide in the phased array LiDAR transmitting chip of multi-layer materials is a single-mode waveguide in TE mode.

Specifically, in this embodiment, waveguides in the first material structure layer, waveguides in the SOI silicon waveguide structure layer, and waveguides in the coupling connection structure are all single-mode waveguides in TE mode.

Further, in this embodiment, the input coupler 41 is an end-face coupler or a grating coupler. The beam splitter 42 is a cascaded multimode interference coupler, a star coupler or a directional coupler.

Specifically, in this embodiment, the end-face coupler or the grating coupler may be selected to couple a light wave to the chip, then the light wave is transmitted by the single-mode waveguide in the TE mode to the first material waveguide of the beam splitter 42 which may be any one of the multimode interference coupler, the star coupler or the directional coupler. When the light wave is divided into a sufficient number of light waves, and each of the optical power satisfies normal transmission in the silicon waveguide, the light waves may be coupled from a first material waveguide to a silicon waveguide in the SOI silicon waveguide structure layer 3 through the coupling connection structure 5.

Further, in this embodiment, the phase modulators 31 are electro-optic phase modulators or thermo-optic phase modulators.

Specifically, in this embodiment, the phase modulator 31 is an electro-optic phase modulator or a thermo-optic phase modulator. The structure of the electro-optic phase modulator is formed as follows: ion implantation is performed on silicon flat plates on both sides of a silicon waveguide in the SOI silicon waveguide structure layer 3 to form a PIN junction or a PN junction with the silicon waveguide; and when a current is passed, the refractive index of a silicon material may be adjusted by the current, thus changing the phase of a light wave in each silicon waveguide. The thermo-optic phase modulator may be a top heating type or a two-side heating type, that is, the heating electrode is located on the top or both sides of the silicon waveguide, biased by the current or voltage. The heat generated by the heating electrode will be transferred to the silicon waveguide. Since silicon is a material with a high thermo-optic coefficient, it is easy to change the refractive index in the waveguide, thus changing the phase of the light wave in each waveguide. It should be noted that, while the heating electrode is too close to the waveguide, the heating electrode will absorb the light wave in the waveguide and cause a large loss, thus the heating electrode needs to be a certain distance away from the waveguide to avoid the loss, and the distance is generally greater than 2 µm. The materials of the heating electrode and metal lead are not limited in the embodiment, but generally the resistivity of the heating electrode is larger than the metal lead by around an order of magnitude.

In the phased array LiDAR transmitting chip of multi-layer materials provided in this embodiment, the input coupler 41 is an end-face coupler or a grating coupler; the beam splitter 42 is a cascaded multimode interference coupler, a star coupler or a directional coupler; and the phase modulators 31 are electro-optic phase modulators or thermo-optic phase modulators, enabling the phased array LiDAR transmitting chip of multi-layer materials to present various types and meet various requirements of different devices.

Further, in this embodiment, the optical antenna 32 is a grating-type optical antenna array.

Specifically, in this embodiment, the light wave in each silicon waveguide is phase-adjusted by the phase modulator 31 and transmitted by the silicon waveguide to the optical antenna 32, and emitted into space by the optical antenna 32. In this embodiment, the optical antenna 32 is a second-order diffraction grating formed on a silicon waveguide array, that is, a grating-type optical antenna array 32. Specific parameters of the grating, such as grating period, duty cycle, and etching depth, are all related to the operating wavelength. When performing grating etching on a silicon waveguide, the grating period needs to be calculated first according to the etching depth. In order to obtain a small far-field divergence angle along the direction of the silicon waveguide and a high longitudinal LiDAR scanning resolution, the etching depth of the second-order diffraction grating of the optical antenna 32 should be designed to be shallow, 20 nm to 100 nm. Because the light wavelength band is 1.5 µm to 1.6 µm, the effective refractive index of the silicon waveguide array for this band is about 2.38. According to the formula of the second-order diffraction grating, it is found that the period of the second-order diffraction grating is 600 nm to 680 nm, that is, the grating is formed on the silicon waveguide uniformly at a distance of the grating period. The width of the grating is determined by a duty cycle, that is, a ratio of the grating width to the grating period. It may be known from calculation that when the light wavelength band is 1.5 µm to 1.6 µm and the duty ratio of the second-order diffraction grating is 0.4 to 0.6, the external radiation efficiency may reach the highest.

Because the waveguide pitch of the optical antenna 32 determines the maximum scanning angle of the final phased array LiDAR transmitting chip, so in this embodiment, the silicon waveguide pitch of the optical antenna 32 is 500 nm to 2.5 µm. The optical antenna 32 will not limit the distribution form of the silicon waveguide. The distribution form may be a uniform distribution, or a gaussian distribution, a sinusoidal distribution, or other distribution forms.

Further, in this embodiment, the phased array LiDAR transmitting chip of multi-layer materials may further includes a protective layer.

Specifically, the protective layer may cover the entire phased array LiDAR transmitting chip of multi-layer materials. The protective layer 12 is a low refractive index protective layer. The material of the low-refractive-index protective layer 12 may be silicon dioxide, and the thickness may be 2 µm to 5 µm.

Further, in this embodiment, after the electrodes of the phased array LiDAR transmitting chip of multi-layer materials are set, windows are formed above the electrodes and the grating of the optical antenna for power input and light input and output. The windows above the grating of the optical antenna 32 may be formed approximately 2 µm away from the grating.

### Fifth embodiment

The fifth embodiment of the present disclosure provides a phased array LiDAR. The phased array LiDAR includes the phased array LiDAR transmitting chip of multi-layer materials according to any one of the first to fourth embodiments of the present disclosure.

The structure and function of the phased array LiDAR transmitting chip of multi-layer materials of the phased array LiDAR in this embodiment are similar to those of the phased array LiDAR transmitting chip of multi-layer materials in any one of the first to fourth embodiments of the present disclosure, which will not be described here again.

In this embodiment, a light source may be made by coupling a laser outside the chip to a phased array LiDAR transmitting chip of multi-layer materials, or a laser bonded to the chip. The detector of the phased array LiDAR may be either an off-chip detector or a detector integrated on the chip, which is not limited in this embodiment.

### Sixth embodiment

FIG. 4 is a flow chart of a method for manufacturing a phased array LiDAR transmitting chip of multi-layer materials according to a sixth embodiment of the present disclosure. As shown in FIG. 4, the method for manufacturing a phased array LiDAR transmitting chip of multi-layer materials provided in this embodiment includes the following steps.

Step 401: form an SOI silicon waveguide structure layer 3 in a first region 30 above a top silicon layer of an SOI substrate.

Specifically, in this embodiment, a waveguide pattern of the SOI silicon waveguide structure layer 3 may be transferred to the top silicon layer of the SOI substrate by using an electron beam exposure process or a stepper lithography process, and the SOI silicon waveguide structure layer 3 may be formed in the first region 30 by using an ICP etching process. Other processes may also be used to form the SOI silicon waveguide structure layer 3 in the first region 30 above the top silicon layer of the SOI substrate, which is not limited in this embodiment.

Where the first region 30 may be located at a rear end on the top silicon layer of the SOI substrate.

Step 402: form a first material structure layer 4 in a second region 40 above the top silicon layer of the SOI substrate, where a coupling connection structure 5 is formed between the rear end of the first material structure layer 4 and the front end of the SOI silicon waveguide structure layer 3.

Specifically, in this embodiment, the waveguide pattern of the first material structure layer 4 may be transferred to the first material structure layer 4 by using the electron beam exposure process or the stepper lithography process, and the first material structure layer 4 may be formed in the second region 40 by using the ICP etching process. Other processes may also be used to form the first material structure layer 4 in the second region 40 above the top silicon layer of the SOI substrate, which is not limited in this embodiment.

Where the second region 40 may be located at the front end of the top silicon layer of the SOI substrate. And projection areas of the first region 30 and the second region 40 overlap each other to form the coupling connection structure 5.

It should be understood that the first region 30 may also be located at the front end on the top silicon of the SOI substrate, and accordingly, the second region 40 may be located at the rear end on the top silicon of the SOI substrate, and projection areas of the first region 30 and the second region 40 overlap each other to form the coupling connection structure 5.

In this embodiment, the first material structure layer 4 includes: an input coupler 41 and a beam splitter 42. A front waveguide pattern in the first material structure layer 4 forms the input coupler 41, and a rear waveguide pattern in the first material structure layer 4 forms the beam splitter 42. The input coupler 41 is configured to couple input light to a chip. The beam splitter 42 is configured to split the light wave coupled to the chip.

The non-linear refractive index of the first material in the first material structure layer 4 is lower than the non-linear refractive index of a silicon material, and the first material is compatible with a CMOS process.

In this embodiment, when the SOI silicon waveguide structure layer 3 and the first material structure layer 4 are formed, the SOI silicon waveguide structure layer 3 and the first material structure layer 4 are not on the same horizontal plane. The SOI silicon waveguide structure layer 3 may be either below the first material structure layer 4 or above the first material structure layer 4, so that a coupling connection structure 5 is formed between the rear end of the beam splitter 42 of the first material structure layer 4 and the front end of the SOI silicon waveguide structure layer 3.

The coupling connection structure 5 includes: first material coupling waveguides 51 and silicon coupling waveguides 52. The first material coupling waveguides 51 are connected to the rear end of a corresponding first material waveguide of the beam splitter 42, and the silicon coupling waveguides 52 are connected to the front end of a corresponding silicon waveguide in the SOI silicon waveguide structure layer 3. The first material coupling waveguides 51 and the silicon coupling waveguides 52 respectively have a wedge structure, the first material coupling waveguides 51 and the silicon coupling waveguides 52 have their tips facing each other, and the first material coupling waveguides 51 and the silicon coupling waveguides 52 have their projection areas overlapping each other.

The method for manufacturing a phased array LiDAR transmitting chip of multi-layer materials provided in this embodiment may be applied to manufacture the phased array LiDAR transmitting chip of multi-layer materials in the first embodiment of the present disclosure. The phased array LiDAR transmitting chip of multi-layer materials has the same structure and function as that in the first embodiment, and details will not be described here again.

### Seventh embodiment

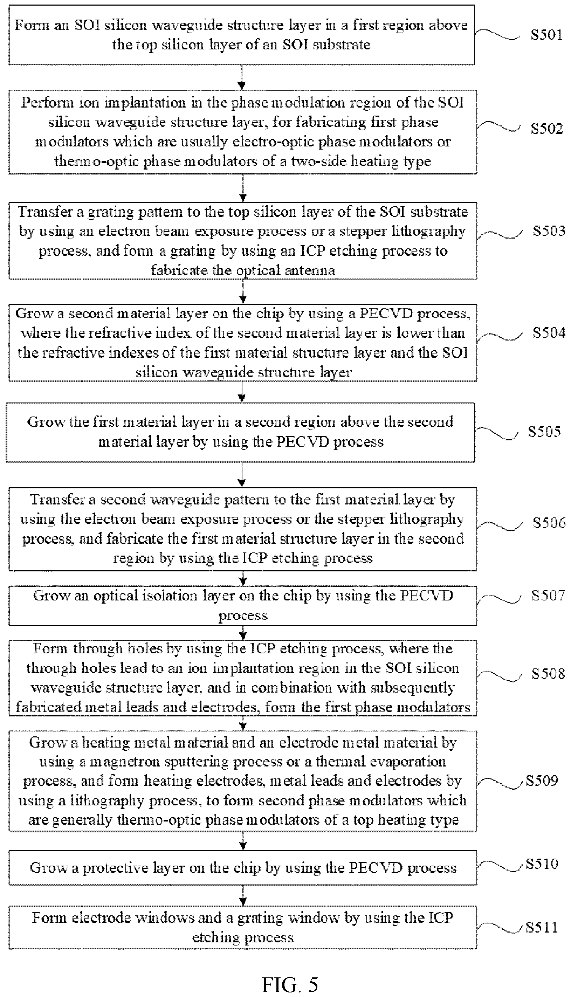

FIG. 5 is a flow chart of a method for manufacturing a phased array LiDAR transmitting chip of multi-layer materials according to a seventh embodiment of the present disclosure. As shown in FIG. 5, the method for manufacturing a phased array LiDAR transmitting chip of multi-layer materials provided in this embodiment is based on the method provided in the sixth embodiment, and further refines the steps 401 and 402 and added some other steps. The method for manufacturing a phased array LiDAR transmitting chip of multi-layer materials according to this embodiment includes following steps.

Step 501: form an SOI silicon waveguide structure layer 3 in a first region 30 above the top silicon layer of an SOI substrate.

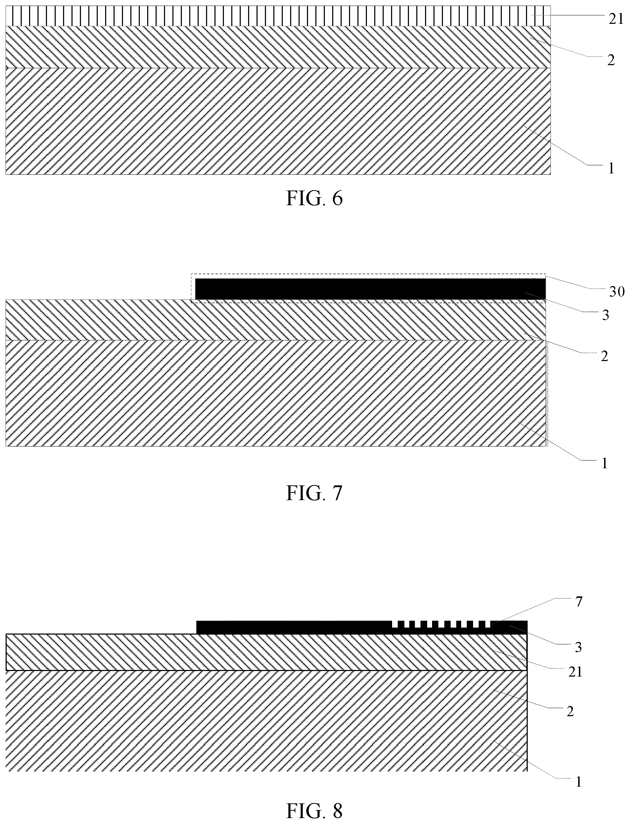

Further, in this embodiment, FIG. 6 is a structure diagram of an SOI substrate according to the seventh embodiment of the present disclosure. FIG. 7 is a structure diagram after step 501 of the method for manufacturing a phased array LiDAR transmitting chip of multi-layer materials according to the seventh embodiment of the present disclosure is executed. As shown in FIG. 7, a first waveguide pattern is transferred to the top silicon layer of the SOI substrate by using an electron beam exposure process or a stepper lithography process and the SOI silicon waveguide structure layer 3 is formed in the first region 30 by using an ICP etching process.

The first region 30 is a rear-end region located above the top silicon layer of the SOI substrate.

Step 502: perform ion implantation in a phase modulation region of the SOI silicon waveguide structure layer 3 to form a PIN junction or a PN junction, for fabricating phase modulators 31.

The first region 30 includes a phase modulation region, and the phase modulation region is located at the front end of the first region 30.

Step 503: transfer a grating pattern to the top silicon layer of the SOI substrate by using an electron beam exposure process or a stepper lithography process, and form a grating 7 by using an ICP etching process to fabricate the optical antenna 32.

FIG. 8 is a structure diagram after step 503 of the method for manufacturing a phased array LiDAR transmitting chip of multi-layer materials according to the seventh embodiment of the present disclosure is executed. As shown in FIG. 8, the grating 7 is located at the rear end of the first region 30.

The first waveguide pattern constitutes the waveguide pattern of the SOI silicon waveguide structure layer 3. A front end of the SOI silicon waveguide structure layer 3 is silicon waveguides 52 connected to the coupling connection structure 5. The silicon waveguides first pass through curved silicon waveguides to increase spacings between the silicon waveguides in the regions of the phase modulators 31, thus achieving thermal or electrical isolation, then pass through curved silicon waveguides to reach the waveguide region of the optical antenna 32 with the waveguide spacing reduced to 500 nm to 2.5 µm.

Step 504: grow a second material layer 6 on the chip by using a PECVD process, where the refractive index of the second material layer 6 is lower than the refractive index of the first material structure layer 4 and the SOI silicon waveguide structure layer 3.

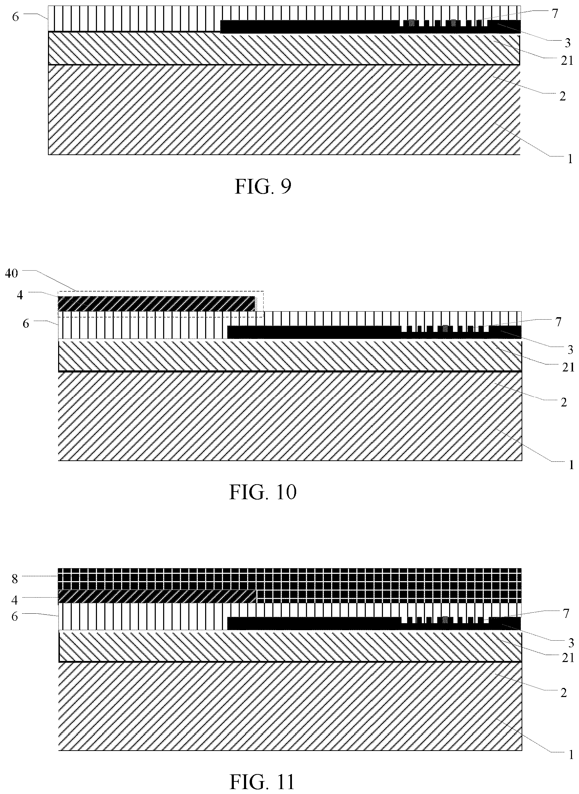

FIG. 9 is a structure diagram after step 504 of the method for manufacturing a phased array LiDAR transmitting chip of multi-layer materials according to the seventh embodiment of the present disclosure is executed. As shown in FIG. 9, the first material structure layer 4 and the SOI silicon waveguide structure layer 3 are separated by the second material layer 6, and the second material layer 6 is compatible with the CMOS process. For example, the second material layer 6 may be a silicon dioxide layer.

Step 505: grow a first material layer in a second region 40 above the second material layer 6 by using the PECVD process.

FIG. 10 is a structure diagram of the method for manufacturing a phased array LiDAR transmitting chip of multi-layer materials according to the seventh embodiment of the present invention after executing step 506. As shown in FIG. 10, the second region 40 is a front-end region above the second material layer 6.

Step 506: transfer a second waveguide pattern to the first material layer by using the electron beam exposure process or the stepper lithography process, and fabricate the first material structure layer 4 in the second region 40 by using the ICP etching process.

The second waveguide pattern constitutes a waveguide pattern in the first material structure layer.

Further, in this embodiment, the first material structure layer 4 is located above the SOI silicon waveguide structure layer 3.

Step 507: grow an optical isolation layer 8 on the chip by using the PECVD process.

FIG. 11 is a structure diagram after step 507 of the method for manufacturing a phased array LiDAR transmitting chip of multi-layer materials according to the seventh embodiment of the present disclosure is executed. As shown in FIG. 11, the optical isolation layer 8 covers the entire chip.

A material of the optical isolation layer 8 may be a silicon dioxide material.

Step 508: form, by using the ICP etching process, through holes on corresponding positions of thermodes and electrodes, the through holes leading to the SOI silicon waveguide structure layer 3.

Step 509: grow a heating metal material and an electrode metal material by using a magnetron sputtering process or a thermal evaporation process, and form thermodes 10, metal leads 11 and electrodes 9 by using a lithography process.

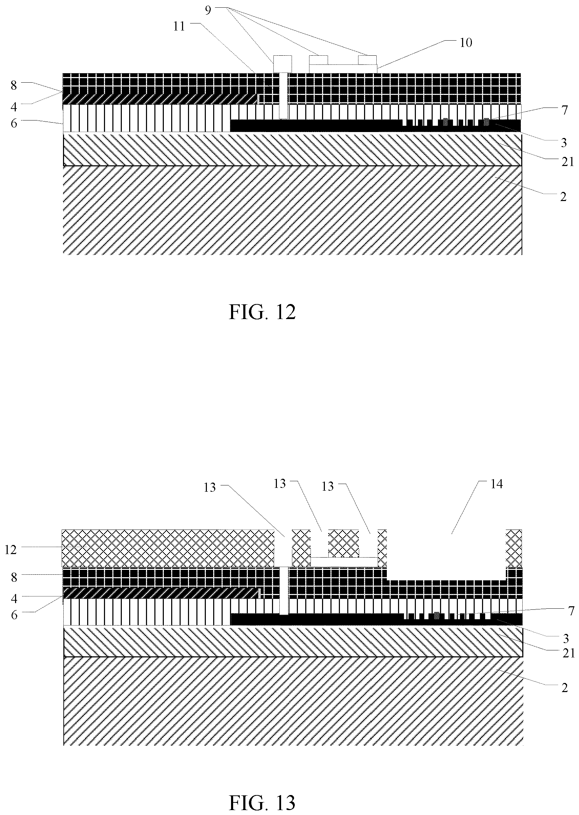

FIG. 12 is a structure diagram after step 509 of the method for manufacturing a phased array LiDAR transmitting chip of multi-layer materials according to the seventh embodiment of the present disclosure is executed. As shown in FIG. 12, in this embodiment, materials of the thermodes 10 and the metal leads 11 are not limited herein. The resistivity of the thermodes 10 may be one order of magnitude greater than the resistivity of the metal leads 11.

Step 510: grow a protective layer 12 on the chip by using the PECVD process.

The material of the protective layer 12 may be silicon dioxide.

Step 511: form electrode windows 13 and a grating window 14 by using the ICP etching process.

FIG. 13 is a structure diagram after step 511 of the method for manufacturing a phased array LiDAR transmitting chip of multi-layer materials according to the seventh embodiment of the present disclosure is executed. As shown in FIG. 13, the protective layer 12 covers the entire chip, the electrode window 13 is located above the electrode, and the grating window 14 is located above the grating.

The method for manufacturing a phased array LiDAR transmitting chip of multi-layer materials provided in this embodiment may be applied to manufacture the phased array LiDAR transmitting chip of multi-layer materials in the fourth embodiment of the present disclosure, where the structure and function of the phased array LiDAR transmitting chip of multi-layer materials in this embodiment are the same as those of the fourth embodiment, and thus will not be described here again.

## Claims

1. A phased array light detection and ranging, LiDAR, transmitting chip of multi-layer materials, comprising: a first material structure layer (4), a silicon on insulator, SOI, silicon waveguide structure layer (3), and a coupling connection structure (5), wherein the first material structure layer (4) comprises: an input coupler (41) and a beam splitter (42), and the coupling connection structure (5) comprises first material coupling waveguides (51) and silicon coupling waveguides (52);
the first material structure layer (4) further comprises a first material backbone waveguide, the input coupler (41) is optically connected to the beam splitter (42) through the first material backbone waveguide; and the beam splitter (42) is optically connected to the SOI silicon waveguide structure layer (3) through the coupling connection structure (5);
the input coupler (41) is configured to couple input light to the chip;
the beam splitter (42) is configured to split a light wave coupled to the chip;
the coupling connection structure (5) is configured to couple each of split light waves to a corresponding silicon waveguide in the SOI silicon waveguide structure layer (3), wherein each of the first material coupling waveguides (51) is connected to a rear end of a corresponding first material waveguide of the beam splitter (42), and each of the silicon coupling waveguides (52) is connected to a front end of a corresponding silicon waveguide in the SOI silicon waveguide structure layer (3), and the first material coupling waveguides (51) and the silicon coupling waveguides (52) have their projection areas overlapping each other; and
a non-linear refractive index of a first material of the first material structure layer (4) is lower than a non-linear refractive index of a silicon material, and the first material is compatible with a CMOS process.

2. The phased array LiDAR transmitting chip of multi-layer materials according to claim 1, wherein the SOI silicon waveguide structure layer (3) comprises: phase modulators (31) and an optical antenna (32);
the phase modulators (31) and the optical antenna (32) are connected through silicon waveguides;
each of the phase modulators (31) is configured to change a phase of a light wave coupled to a corresponding silicon waveguide in the SOI silicon waveguide structure layer (3); and
the optical antenna (32) is configured to transmit phase-changed light waves in silicon waveguides into space.

3. The phased array LiDAR transmitting chip of multi-layer materials according to claim 1, wherein the first material structure layer (4) is located above the SOI silicon waveguide structure layer (3), and the first material structure layer (4) and the SOI silicon waveguide structure layer (3) are separated by a second material layer (6);
wherein a refractive index of the second material layer (6) is lower than a refractive index of the first material structure layer (4) and the SOI silicon waveguide structure layer (3).

4. The phased array LiDAR transmitting chip of multi-layer materials according to claim 1, wherein
the first material coupling waveguides (51) and the silicon coupling waveguides (52) have respective wedge structures, the first material coupling waveguides (51) and the silicon coupling waveguides (52) have their tips facing each other one by one.

5. The phased array LiDAR transmitting chip of multi-layer materials according to claim 4, wherein the first material coupling waveguides (51) and the silicon coupling waveguides (52) have a tip width of 100 nm to 300 nm;
a rear-end width of each of the first material coupling waveguides (51) is the same as a width of the corresponding first material waveguides of the beam splitter (42), and a rear-end width of each of the silicon coupling waveguides (52) is the same as a width of the corresponding silicon waveguide in the SOI silicon waveguide structure layer (3); and
the overlapping region has a length of 10 µm to 100 µm.

6. A phased array LiDAR device, comprising the phased array LiDAR transmitting chip of multi-layer materials according to any one of claims 1 to 5.

7. A method for manufacturing the phased array LiDAR transmitting chip of multi-layer materials according to any one of claims 1 to 5, comprising:
forming (S401, S501) an SOI silicon waveguide structure layer in a first region above a top silicon layer of an SOI substrate, wherein the SOI silicon waveguide structure layer comprises silicon coupling waveguides, phase modulators and an optical antenna; and
forming (S402) a first material structure layer in a second region above the top silicon layer of the SOI substrate, so that a coupling connection structure is formed between a rear end of the first material structure layer and a front end of the SOI silicon waveguide structure layer.

8. The method according to claim 7, wherein the forming an SOI silicon waveguide structure layer in a first region above a top silicon layer of an SOI substrate comprises:
transferring a first waveguide pattern to the top silicon layer of the SOI substrate by using an electron beam exposure process or a stepper lithography process, and forming the SOI silicon waveguide structure layer in the first region by using an inductively coupled plasma, ICP, etching process.

9. The method according to claim 8, wherein after the forming an SOI silicon waveguide structure layer in a first region above a top silicon layer of an SOI substrate, the method further comprises:
performing (S502) ion implantation in a phase modulation region of the SOI silicon waveguide structure layer to form a PIN junction or a PN junction, for fabricating phase modulators;
transferring (S503) a grating pattern to the top silicon layer of the SOI substrate by using the electron beam exposure process or the stepper lithography process, and forming a grating by using the ICP etching process to fabricate the optical antenna
growing (S504) a second material layer on the chip by using a plasma enhanced chemical vapor deposition, PECVD, process, wherein the first material structure layer is located above the SOI silicon waveguide structure layer, and the first material structure layer and the SOI silicon waveguide structure layer are separated by the second material layer;
wherein a refractive index of the second material layer is lower than a refractive index of the first material structure layer and the SOI silicon waveguide structure layer.

10. The method according to claim 9, wherein the forming a first material structure layer in a second region above the top silicon layer of the SOI substrate comprises:
growing (S505) a first material layer in the second region above the second material layer by using the PECVD process; and
transferring (S506) a second waveguide pattern to the first material layer by using the electron beam exposure process or the stepper lithography process, and fabricating the first material structure layer in the second region by using the ICP etching process.

11. The method according to claim 7, wherein after forming (S402) the first material structure layer in the second region above the top silicon layer of the SOI substrate, the method further comprises:
growing (S507) an optical isolation layer on the chip by using the PECVD process;
growing (S509) a heating metal material and an electrode metal material by using a magnetron sputtering process or a thermal evaporation process, and forming thermodes, metal leads and electrodes by using a lithography process to form second phase modulators;
growing (S510) a protective layer on the chip by using the PECVD process; and
forming (S511) electrode windows and a grating window by using the ICP etching process.

## Patentansprüche

1. Phasengesteuerter Lichtdetektions- und Entfernungsmessungssendechip aus Mehrschichtmaterialien, phasengesteuerter LiDAR-Sendechip aus Mehrschichtmaterialien, umfassend: eine Strukturschicht (4) aus erstem Material, eine Silizium-auf-Isolator-Siliziumwellenleiterstrukturschicht, SOI-Siliziumwellenleiterstrukturschicht, (3) und eine Kopplungsverbindungsstruktur (5), wobei die Strukturschicht (4) aus erstem Material umfasst: einen Eingangskoppler (41) und einen Strahlteiler (42), und die Kopplungsverbindungsstruktur (5) Kopplungswellenleiter (51) aus erstem Material und Siliziumkopplungswellenleiter (52) umfasst;
die Strukturschicht (4) aus erstem Material ferner einen Rückgratwellenleiter aus erstem Material umfasst, wobei der Eingangskoppler (41) über den Rückgratwellenleiter aus erstem Material mit dem Strahlteiler (42) optisch verbunden ist; und der Strahlteiler (42) über die Kopplungsverbindungsstruktur (5) mit der SOI-Siliziumwellenleiterstrukturschicht (3) optisch verbunden ist;
der Eingangskoppler (41) konfiguriert ist, um Eingangslicht mit dem Chip zu koppeln;
der Strahlteiler (42) konfiguriert ist, um eine Lichtwelle aufzuteilen, die an den Chip gekoppelt ist;
die Kopplungsverbindungsstruktur (5) konfiguriert ist, um jede der aufgeteilten Lichtwellen mit einem entsprechenden Siliziumwellenleiter in der SOI-Siliziumwellenleiterstrukturschicht (3) zu koppeln, wobei jeder der Kopplungswellenleiter (51) aus erstem Material mit einem hinteren Ende eines entsprechenden Wellenleiters aus erstem Material des Strahlteilers (42) verbunden ist und jeder der Siliziumkopplungswellenleiter (52) mit einem vorderen Ende eines entsprechenden Siliziumwellenleiters in der SOI-Siliziumwellenleiterstrukturschicht (3) verbunden ist und die Kopplungswellenleiter (51) aus erstem Material und die Siliziumkopplungswellenleiter (52) ihre Projektionsflächen einander überlappend aufweisen; und
ein nicht linearer Brechungsindex aus einem erstem Material der Strukturschicht (4) aus erstem Material niedriger als ein nicht linearer Brechungsindex eines Siliziummaterials ist, und das erste Material mit einem CMOS-Prozess kompatibel ist.

2. Phasengesteuerter LiDAR-Sendechip aus Mehrschichtmaterialien nach Anspruch 1, wobei die SOI-Siliziumwellenleiterstrukturschicht (3) umfasst:
Phasenmodulatoren (31) und eine optische Antenne (32);
wobei die Phasenmodulatoren (31) und die optische Antenne (32) durch Siliziumwellenleiter verbunden sind;
jeder der Phasenmodulatoren (31) konfiguriert ist, um eine Phase einer Lichtwelle zu ändern, die mit einem entsprechenden Siliziumwellenleiter in der SOI-Siliziumwellenleiterstrukturschicht (3) gekoppelt ist; und
die optische Antenne (32) konfiguriert ist, um phasenveränderte Lichtwellen in Siliziumwellenleitern in einen Raum zu senden.

3. Phasengesteuerter LiDAR-Sendechip aus Mehrschichtmaterialien nach Anspruch 1, wobei sich die Strukturschicht (4) aus erstem Material oberhalb der SOI-Siliziumwellenleiterstrukturschicht (3) befindet und die Strukturschicht (4) aus erstem Material und die SOI-Siliziumwellenleiterstrukturschicht (3) durch eine Schicht (6) aus zweitem Material getrennt sind;
wobei ein Brechungsindex der Schicht (6) aus zweitem Material niedriger als ein Brechungsindex der Strukturschicht (4) aus erstem Material und der SOI-Siliziumwellenleiterstrukturschicht (3) ist.

4. Phasengesteuerter LiDAR-Sendechip aus Mehrschichtmaterialien nach Anspruch 1, wobei
die Kopplungswellenleiter (51) aus erstem Material und die Siliziumkopplungswellenleiter (52) jeweils Keilstrukturen aufweisen, wobei die Kopplungswellenleiter (51) aus erstem Material und der Siliziumkopplungswellenleiter (52) ihre Spitzen einander nacheinander zugewandt aufweisen.

5. Phasengesteuerter LiDAR-Sendechip aus Mehrschichtmaterialien nach Anspruch 4, wobei die Kopplungswellenleiter (51) aus erstem Material und die Siliziumkopplungswellenleiter (52) eine Spitzenbreite von 100 nm bis 300 nm aufweisen;
eine Breite eines hinteren Endes jedes der Kopplungswellenleiter (51) aus erstem Material die gleiche wie eine Breite der entsprechenden Wellenleiter aus erstem Material des Strahlteilers (42) ist und eine Breite des hinteren Endes jedes der Siliziumkopplungswellenleiter (52) die gleiche wie eine Breite des entsprechenden Siliziumwellenleiters in der SOI-Siliziumwellenleiterstrukturschicht (3) ist; und
der Überlappungsbereich eine Länge von 10 µm bis 100 µm aufweist.

6. Phasengesteuerte LiDAR-Vorrichtung, umfassend den phasengesteuerten LiDAR-Sendechip aus Mehrschichtmaterialien nach einem der Ansprüche 1 bis 5.

7. Verfahren zum Herstellen des phasengesteuerten LiDAR-Sendechips aus Mehrschichtmaterialien nach einem der Ansprüche 1 bis 5, umfassend:
Ausbilden (S401, S501) einer SOI-Siliziumwellenleiterstrukturschicht in einem ersten Bereich oberhalb einer oberen Siliziumschicht eines SOI-Substrats, wobei die SOI-Siliziumwellenleiterstrukturschicht Siliziumkopplungswellenleiter, Phasenmodulatoren und eine optische Antenne umfasst; und
Ausbilden (S402) einer Strukturschicht aus erstem Material in einem zweiten Bereich oberhalb der oberen Siliziumschicht des SOI-Substrats, sodass eine Kopplungsverbindungsstruktur zwischen einem hinteren Ende der Strukturschicht aus erstem Material und einem vorderen Ende der SOI-Siliziumwellenleiterstrukturschicht ausgebildet wird.

8. Verfahren nach Anspruch 7, wobei das Ausbilden einer SOI-Siliziumwellenleiterstrukturschicht in einem ersten Bereich oberhalb einer oberen Siliziumschicht eines SOI-Substrats umfasst:
Übertragen eines ersten Wellenleitermusters auf die obere Siliziumschicht des SOI-Substrats durch Verwenden eines Elektronenstrahlbelichtungsprozesses oder eines Stepperlithographieprozesses und Ausbilden der SOI-Siliziumwellenleiterstrukturschicht in dem ersten Bereich durch Verwenden eines Ätzprozesses eines induktiv gekoppelten Plasmas, ICP-Ätzprozess.

9. Verfahren nach Anspruch 8, wobei, nach dem Ausbilden einer SOI-Siliziumwellenleiterstrukturschicht in einem ersten Bereich oberhalb einer oberen Siliziumschicht eines SOI-Substrats, das Verfahren ferner umfasst:
Durchführen (S502) einer Ionenimplantation in einem Phasenmodulationsbereich der SOI-Siliziumwellenleiterstrukturschicht, um einen PIN-Übergang oder einen PN-Übergang auszubilden, zum Anfertigen von Phasenmodulatoren;
Übertragen (S503) eines Gittermusters auf die obere Siliziumschicht des SOI-Substrats durch Verwenden des Elektronenstrahlbelichtungsprozesses oder des Stepperlithographieprozesses und Ausbilden eines Gitters durch Verwenden des ICP-Ätzprozesses, um die optische Antenne anzufertigen;
Züchten (S504) einer Schicht aus zweitem Material auf dem Chip durch Verwenden eines Prozesses einer plasmaverstärkten chemischen Gasphasenabscheidung, PECVD-Prozess, wobei sich die Strukturschicht aus erstem Material oberhalb der SOI-Siliziumwellenleiterstrukturschicht befindet und die Strukturschicht aus erstem Material und die SOI-Siliziumwellenleiterstrukturschicht durch die Schicht aus zweitem Material getrennt sind;
wobei ein Brechungsindex der Schicht aus zweitem Material niedriger als ein Brechungsindex der Strukturschicht aus erstem Material und der SOI-Siliziumwellenleiterstrukturschicht ist.

10. Verfahren nach Anspruch 9, wobei das Ausbilden einer Strukturschicht aus erstem Material in einem zweiten Bereich oberhalb der oberen Siliziumschicht des SOI-Substrats umfasst:
Züchten (S505) einer Schicht aus erstem Material in dem zweiten Bereich oberhalb der Schicht aus zweitem Material durch Verwenden des PECVD-Prozesses; und
Übertragen (S506) eines zweiten Wellenleitermusters auf die Schicht aus erstem Material durch Verwenden des Elektronenstrahlbelichtungsprozesses oder des Stepperlithographieprozesses und Anfertigen der Strukturschicht aus erstem Material in dem zweiten Bereich durch Verwenden des ICP-Ätzprozesses.

11. Verfahren nach Anspruch 7, wobei, nach dem Ausbilden (S402) der Strukturschicht aus erstem Material in dem zweiten Bereich oberhalb der oberen Siliziumschicht des SOI-Substrats, das Verfahren ferner umfasst:
Züchten (S507) einer optischen Isolierschicht auf dem Chip durch Verwenden des PECVD-Prozesses;
Züchten (S509) eines Heizmetallmaterials und eines Elektrodenmetallmaterials durch Verwenden eines Magnetronsputterprozesses oder eines Prozesses einer thermischen Verdampfung und Ausbilden von Thermoden, Metallleitungen und Elektroden durch Verwenden eines Lithographieprozesses, um zweite Phasenmodulatoren auszubilden;
Züchten (S510) einer Schutzschicht auf dem Chip durch Verwenden des PECVD-Prozesses; und
Ausbilden (S511) von Elektrodenfenstern und eines Gitterfensters durch Verwenden des ICP-Ätzprozesses.

## Revendications

1. Puce de transmission de détection et télémétrie par ondes lumineuses, LiDAR, de réseau à commande de phase de matériaux multicouches, comprenant : une couche de structure de premier matériau (4), une couche de structure de guide d'ondes de silicium de silicium sur isolant SOI (3) et une structure de connexion de couplage (5), dans laquelle la couche de structure de premier matériau (4) comprend : un coupleur d'entrée (41) et un diviseur de faisceau (42), et la structure de connexion de couplage (5) comprend des guides d'ondes de couplage de premier matériau (51) et des guides d'ondes de couplage de silicium (52) ;
la couche de structure de premier matériau (4) comprend en outre un guide d'ondes de réseau fédérateur de premier matériau, le coupleur d'entrée (41) est optiquement connecté au diviseur de faisceau (42) à travers le guide d'ondes de réseau fédérateur de premier matériau ; et le diviseur de faisceau (42) est optiquement connecté à la couche de structure de guide d'ondes de silicium SOI (3) à travers la structure de connexion de couplage (5) ;
le coupleur d'entrée (41) est configuré pour coupler une lumière d'entrée à la puce ;
le diviseur de faisceau (42) est configuré pour diviser une onde lumineuse couplée à la puce ;
la structure de connexion de couplage (5) est configurée pour coupler chacune des ondes lumineuses divisées à un guide d'ondes de silicium correspondant dans la couche de structure de guide d'ondes de silicium SOI (3), dans laquelle chacun des guides d'ondes de couplage de premier matériau (51) est connecté à une extrémité arrière d'un guide d'ondes de premier matériau du diviseur de faisceau (42), et chacun des guides d'ondes de couplage de silicium (52) est connecté à une extrémité avant d'un guide d'ondes de silicium correspondant dans la couche de structure de guide d'ondes de silicium SOI (3), et les guides d'ondes de couplage de premier matériau (51) et les guides d'ondes de couplage de silicium (52) ont leurs zones de projection se chevauchant les unes les autres ; et
un indice de réfraction non linéaire d'un premier matériau de la couche de structure de premier matériau (4) est inférieur à un indice de réfraction non linéaire d'un matériau de silicium, et le premier matériau est compatible avec un processus CMOS.

2. Puce de transmission de LiDAR de réseau à commande de phase de matériaux multicouches selon la revendication 1, dans laquelle la couche de structure de guide d'ondes de silicium SOI (3) comprend : des modulateurs de phase (31) et une antenne optique (32) ;
les modulateurs de phase (31) et l'antenne optique (32) sont raccordés à travers des guides d'ondes de silicium ;
chacun des modulateurs de phase (31) est configuré pour changer une phase d'une onde lumineuse couplée à un guide d'ondes de silicium correspondant dans la couche de structure de guide d'ondes de silicium SOI (3) ; et
l'antenne optique (32) est configurée pour transmettre des ondes lumineuses modifiées en phase dans des guides d'ondes de silicium dans l'espace.

3. Puce de transmission de LiDAR de réseau à commande de phase de matériaux multicouches selon la revendication 1, dans laquelle la couche de structure de premier matériau (4) est située au-dessus de la couche de structure de guide d'ondes de silicium SOI (3), et la couche de structure de premier matériau (4) et la couche de structure de guide d'ondes de silicium SOI (3) sont séparées par une couche de second matériau (6) ;
dans laquelle un indice de réfraction de la couche de second matériau (6) est inférieur à un indice de réfraction de la couche de structure de premier matériau (4) et de la couche de structure de guide d'ondes de silicium SOI (3).

4. Puce de transmission de LiDAR de réseau à commande de phase de matériaux multicouches selon la revendication 1, dans laquelle
les guides d'ondes de couplage de premier matériau (51) et les guides d'ondes de couplage de silicium (52) ont des structures en coin respectives, les guides d'ondes de couplage de premier matériau (51) et les guides d'ondes de couplage de silicium (52) ont leurs pointes orientées l'une vers l'autre, l'une après l'autre.

5. Puce de transmission de LiDAR de réseau à commande de phase de matériaux multicouches selon la revendication 4, dans laquelle les guides d'ondes de couplage de premier matériau (51) et les guides d'ondes de couplage de silicium (52) ont une largeur de pointe de 100 nm à 300 nm ;
une largeur d'extrémité arrière de chacun des guides d'ondes de couplage de premier matériau (51) est la même qu'une largeur des guides d'ondes de premier matériau correspondants du diviseur de faisceau (42), et une largeur d'extrémité arrière de chacun des guides d'ondes de couplage de silicium (52) est la même qu'une largeur du guide d'ondes de silicium correspondant dans la couche de structure de guide d'ondes de silicium SOI (3) ; et
la région de chevauchement a une longueur de 10 µm à 100 µm.

6. Dispositif LiDAR de réseau à commande de phase, comprenant la puce de transmission de LiDAR de réseau à commande de phase de matériaux multicouches selon l'une quelconque des revendications 1 à 5.

7. Procédé de fabrication de la puce de transmission de LiDAR de réseau à commande de phase de matériaux multicouches selon l'une quelconque des revendications 1 à 5, comprenant :
la formation (S401, S501) d'une couche de structure de guide d'ondes de silicium SOI dans une première région au-dessus d'une couche de silicium supérieure d'un substrat SOI, dans lequel la couche de structure de guide d'ondes de silicium SOI comprend des guides d'ondes de couplage de silicium, des modulateurs de phase et une antenne optique ; et
la formation (S402) d'une couche de structure de premier matériau dans une seconde région au-dessus de la couche de silicium supérieure du substrat SOI, de sorte qu'une structure de connexion de couplage est formée entre une extrémité arrière de la couche de structure de premier matériau et une extrémité avant de la couche de structure de guide d'ondes de silicium SOI ;

8. Procédé selon la revendication 7, dans lequel la formation d'une couche de structure de guide d'ondes de silicium SOI dans une première région au-dessus d'une couche de silicium supérieure d'un substrat SOI comprend :
le transfert d'un premier motif de guide d'ondes à la couche de silicium supérieure du substrat SOI à l'aide d'un processus d'exposition à un faisceau d'électrons ou un processus de lithographie pas à pas, et la formation de la couche de structure de guide d'ondes de silicium SOI dans la première région à l'aide d'un processus de gravure à plasma à couplage inductif, ICP.

9. Procédé selon la revendication 8, dans lequel, après la formation d'une couche de structure de guide d'ondes de silicium SOI dans une première région au-dessus d'une couche de silicium supérieure d'un substrat SOI, le procédé comprend en outre :
la réalisation (S502) d'une implantation ionique dans une région de modulation de phase de la couche de structure de guide d'ondes de silicium SOI pour former une jonction PIN ou une jonction PN, pour produire des modulateurs de phase ;
le transfert (S503) d'un motif de réseau à la couche de silicium supérieure du substrat SOI à l'aide du processus d'exposition à un faisceau d'électrons ou du processus de lithographie pas à pas, et la formation d'un réseau à l'aide du processus de gravure à ICP afin de produire l'antenne optique
la croissance (S504) d'une couche de second matériau sur la puce à l'aide d'un processus de dépôt chimique en phase vapeur assisté par plasma, PECVD, dans lequel la couche de structure de premier matériau est située au-dessus de la couche de structure de guide d'ondes de silicium SOI, et la couche de structure de premier matériau et la couche de structure de guide d'ondes de silicium SOI sont séparées par la couche de second matériau ;
dans lequel un indice de réfraction de la couche de second matériau est inférieur à un indice de réfraction de la couche de structure de premier matériau et de la couche de structure de guide d'ondes de silicium SOI.

10. Procédé selon la revendication 9, dans lequel la formation d'une couche de structure de premier matériau dans une seconde région au-dessus de la couche de silicium supérieure du substrat SOI comprend :
la croissance (S505) d'une couche de premier matériau dans la seconde région au-dessus de la couche de second matériau à l'aide du processus de PECVD ; et
le transfert (S506) d'un second motif de guide d'ondes à la couche de premier matériau à l'aide du processus d'exposition à un faisceau d'électrons ou du processus de lithographie pas à pas, et la production de la couche de structure de premier matériau dans la seconde région à l'aide du processus de gravure à ICP.

11. Procédé selon la revendication 7, dans lequel, après la formation (S402) de la couche de structure de premier matériau dans la seconde région au-dessus de la couche de silicium supérieure du substrat SOI, le procédé comprend en outre :
la croissance (S507) d'une couche d'isolation optique sur la puce à l'aide du processus de PECVD ;
la croissance (S509) d'un matériau métallique chauffant et d'un matériau métallique d'électrode à l'aide d'un processus de pulvérisation magnétron ou d'un processus d'évaporation thermique, et la formation de thermodes, de fils métalliques et d'électrodes à l'aide d'un processus de lithographie afin de former de seconds modulateurs de phase ;
la croissance (S510) d'une couche protectrice sur la puce à l'aide du processus de PECVD ; et
la formation (S511) de fenêtres d'électrodes et d'une fenêtre de réseau à l'aide du processus de gravure à ICP.
